# EUROPÄISCHE PATENTSCHRIFT

(11) **EP 0 595 240 B1**
(45) Veröffentlichungstag und Bekanntmachung des Hinweises auf die Patenterteilung: **03.06.1998**
(21) Anmeldenummer: 93117277.9
(22) Anmeldetag: 25.10.1993
(51) Int. Cl.: G01G 21/28, G01G 13/20

(54) **Dosierapparat an einer Kunststoffschneckenpresse**
Dosing apparatus on a plastics extruder
Doseur à une extrudeuse à vis

(30) Priorität: 28.10.1992 DE 9214622 U
(43) Veröffentlichungstag der Anmeldung: 04.05.1994
(73) Patentinhaber: Mann + Hummel ProTec GmbH, 71631 Ludwigsburg (DE)
(72) Erfinder: Vollmar, Hartmut, 53639 Königswinter (DE)
(74) Vertreter: Voth, Gerhard, Dipl.-Ing.

(56) Entgegenhaltungen:
- EP-A- 0 170 322
- WO-A-86/07630
- WO-A-91/11690
- DE-A- 2 264 466
- DE-U- 9 214 622
- US-A- 5 148 943

## Beschreibung

Die Erfindung betrifft einen an einer Kunststoff-Schneckenpresse vorgesehenen Dosierapparat Beschickstoff bezeichnet im Rahmen der Erfindung körnigen oder feinteiligen Beschick-Kunststoff, insbesondere auch unterschiedliche Kunststoffe, beispielsweise unterschiedlich eingefärbte Kunststoffe, aber auch Zusatzstoffe. In die Pufferbehälter wird eine vorgegebene Masse an Beschickstoff mit Hilfe der Einfüll-Wiegeeinrichtung eingewogen. Sie wird mit Hilfe der Abzug-Schneckenförderer aus dem jeweiligen Pufferbehälter dosiert abgezogen, und zwar nach Maßgabe einer vorgegebenen Mischrezeptur. Die bezüglich der Komponenten wohldosierte Mischung verläßt den Mischbehälter.

Bei einem aus der Praxis bekannten Dosierapparat, von dem die Erfindung ausgeht, besitzt der Mischtrichter im Bereich seines oberen Randes nach Maßgabe der Seiten eines Quadrates angeordnete Montageflächen. Auf diese Weise können vier der beschriebenen Apparategestelle mit ihren Aggregaten aus Pufferbehälter, Einfüll-Wiegeeinrichtung und Abzug-Schneckenförderer angeschlossen werden. Ein Dosierapparat dieses Aufbaus wird je nach dem herzustellenden Produkt mit einer unterschiedlichen Anzahl von Apparategestellen mit ihren Aggregaten aus Pufferbehälter, Einfüll-Wiegeeinrichtung und Abzug-Schneckenförderer versehen. Sind bei der bekannten Ausführungsform drei solcher Apparategestelle angeschlossen, so kann die Zuführung der einzelnen Beschickstoffe nicht mehr ausreichend symmetrisch in bezug auf die Achse des Mischtrichters erfolgen. Das stört die Schüttkegelbildung im Mischtrichter. Es kann sich anstelle eines in bezug auf die Mischtrichterachse symmetrischen Schüttkegels eine schräge Oberfläche der Beschickstoffe im Mischtrichter bilden und es können ganze Volumenbereiche entstehen, die nacheinander abgezogen werden, so daß die Durchmischung gestört wird. Es kommt aber darauf an, die einzelnen dosierten Komponenten des Beschickstoffes nach Maßgabe der Mischrezeptur gleichzeitig abzuziehen. Mehr als vier Apparategestelle mit den beschriebenen Aggregaten können bei der bekannten Ausführungsform an den Mischtrichter nicht angeschlossen werden. Im allgemeinen besteht auch keine Möglichkeit, in der Mitte des Dosierapparates ein fünftes Aggregat aus Pufferbehälter, Einfüll-Wiegeeinrichtung und Abzug anzuordnen.

Der Erfindung liegt die Aufgabe zugrunde, einen Dosierapparat zu schaffen, an den weniger oder mehr als vier der Apparategestelle mit den beschriebenen Aggregaten mit hoher Symmetrie in bezug auf die Achse des Mischtrichters angeschlossen werden können. Die Lösung geschicht und dem einzigen Patentanspruch.

Im folgenden wird die Erfindung anhand einer lediglich ein Ausführungsbeispiel darstellenden Zeichnung ausführlicher erläutert. Es zeigen in schematischer Darstellung
- Fig. 1: die Ansicht eines erfindungsgemäßen Dosierapparates mit zwei Apparategestellen und einem zentralen Pufferbehälter,
- Fig. 2: in gegenüber der Fig. 1 wesentlich vergrößertem Maßstab entsprechend dem Ausschnitt A der Fig. 1 den Mischtrichter des Gegenstandes der Fig. 1,
- Fig. 3: einen Vertikalschnitt durch den Gegenstand der Fig. 2, und
- Fig. 4: einen Schnitt in Richtung B-B durch den Gegenstand nach Fig. 2.

Der in den Figuren dargestellte Dosierapparat 1 ist insbesondere zur Zuführung von Beschickstoff zu einer Kunststoff-schneckenpresse bestimmt. Die Kunststoffschneckenpresse wird mit ihrem Aufgabestutzen oder Aufgabetrichter bei 2 angeschlossen.

Zu dem Dosierapparat 1 gehören eine Mehrzahl von Pufferbehältern 3 für die Aufnahme von von Pufferbehälter zu Pufferbehälter unterschiedlichen Beschickstoffen, den einzelnen Pufferbehältern 3 zugeordneten Einfüll-Wiegeeinrichtungen 4 und den einzelnen Pufferbehältern 3 zugeordnete Abzug-Schneckenförderer 5 für den dosierten Abzug der Beschickstoffe aus den Pufferbehältern 3 sowie ein Mischtrichter 6 mit Ablaufstutzen 7 für die Mischung.

Die einzelnen Pufferbehälter 3 mit den den einzelnen Pufferbehältern 3 zugeordneten Einfüll-Wiegeeinrichtungen 4 und die Abzug-Schneckenförderer 5 sind jeweils in einem Apparategestell 8 angeordnet. Die Apparategestelle 8 und/oder Abzug-Schneckenförderer sind an dem Mischtrichter 6 befestigt.

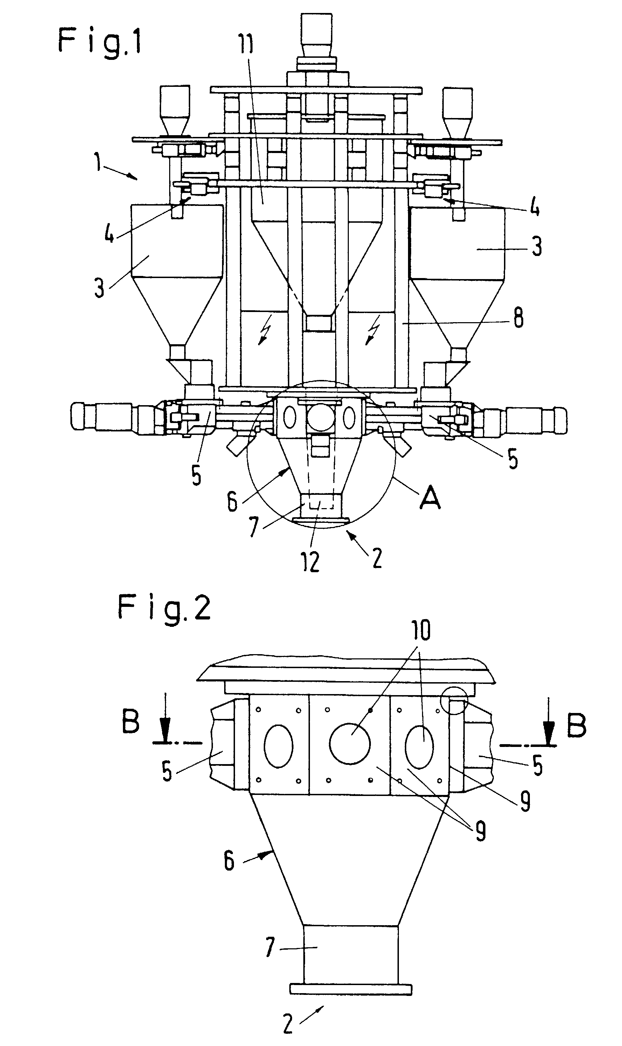

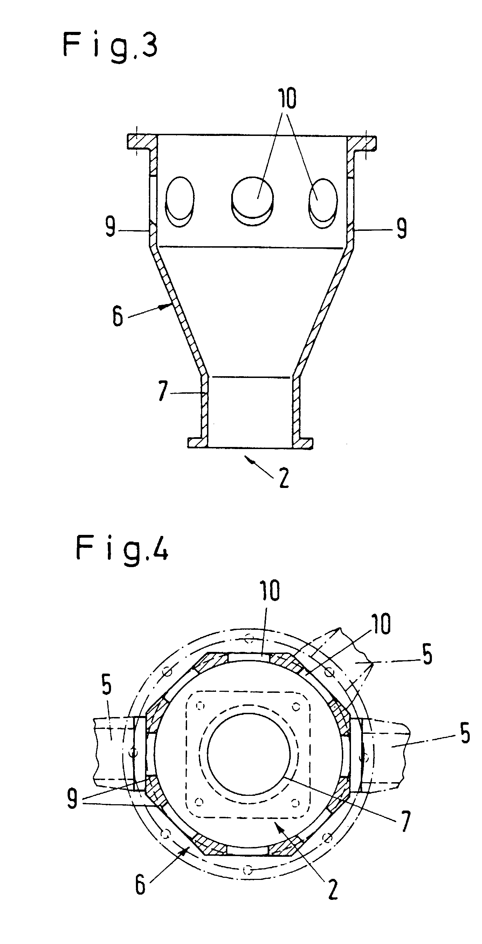

In der Fig. 1 fehlen frontseitig die Apparategestelle 8 und die darin angeordneten Pufferbehälter 3, Einfüll-Wiegeeinrichtungen 4 und Abzug-Schneckenförderer 5. Man entnimmt aus einer vergleichenden Betrachtung der Fig. 1 sowie 2 und 4, daß der Mischtrichter 6 im Bereich seines oberen Randes nach Maßgabe der Seiten eines achteckigen regelmäßigen Vielecks Montageflächen 9 für jeweils ein Apparategestell 8 und/oder einen Abzug-Schneckenförderer 5 aufweist. Die Anordnung ist so getroffen, daß die einzelnen Montageflächen 9 eine Übergabeöffnung für den aus dem zugeordneten Abzug-Schneckenförderer 5 austretenden Beschickstoff besitzen. Diese Übergabe¶ öffnung 10 ist bei Nichtanschluß eines Apparategestells 8 mit den beschriebenen Aggregaten, z.B. durch eine aufgesetzte Platte, verschließbar. In der Fig. 1 erkennt man, daß in der Mitte zwischen den zumindest acht Montageflächen 9 ein weiterer größerer Pufferbehälter 11 für einen Beschickstoff angeordnet ist, dessen Auslauf 12 unmittelbar oder über einen Dosierförderer in den Mischtrichter 6 einmündet. Aus der Fig. 4 entnimmt man, daß dazu hinreichend Platz zur Verfügung steht. In der Ausführungsform für Kunststoffschneckenpressen ist der Ablaufstutzen 7 des Mischtrichters 6 unmittelbar an den Aufgabestutzen oder an den Aufgabetrichter der Kunststoffschneckenpresse anschließbar, z. B. angeflanscht.

## Patentansprüche

1. An einer Kunststoff-Schneckenpresse vorgesehener Dosierapparat zur Zuführung von Beschickstoffen zur Kunststoff-Schneckenpresse, mit einer Mehrzahl von Pufferbehältern (3) für die Aufnahme von von Pufferbehälter (3) zu Pufferbehälter (3) unterschiedlichen Beschickstoffen, den einzelnen Pufferbehältern (3) zugeordneten Einfüll-Wiegeeinrichtungen (4), Abzug-Schneckenförderern (5) für den dosierten Abzug der Beschickstoffe aus dem Pufferbehälter (3) und mit einem Mischtrichter (6) mit Ablaufstutzen (7) für die Mischung, wobei die einzelnen Pufferbehälter (3) mit der den einzelnen Pufferbehältern (3) zugeordneten Einfüll-Wiegeeinrichtung (4) und mit dem den einzelnen Pufferbehältern (3) zugeordneten Abzug-Schneckenförderer (5) in jeweils einem Apparategestell (8) angeordnet sind, und zwar wahlweise und je nach den herzustellenden Kunststoffgegenständen in unterschiedlicher Anzahl, wobei ferner ein weiterer Pufferbehälter (11) für einen weiteren Beschickstoff vorgesehen ist, dessen Auslauf (12) unmittelbar oder über einen Dosierförderer in den Mischtrichter (6) axial einmündet, **dadurch gekennzeichnet,** daß die Apparategestelle (8) an dem Mischtrichter (6) befestigt sind, daß der Mischtrichter (6) im Bereich seines oberen Randes nach Maßgabe der Seiten eines zumindest achteckigen regelmäßigen Vielecks Montageflächen (9) für jeweils einen Abzug-Schneckenförderer (5) aufweist, und daß die einzelnen Montageflächen (9) eine Übergabeöffnung (10) für den aus dem zugeordneten Abzug-Schneckenförderer (5) austretenden Beschickstoff besitzen, welche Übergabeöffnungen (10) bei nicht angeschlossenem Abzug-Schneckenförderer (5) verschließbar sind, daß der weitere Pufferbehälter (11) in der Mitte zwischen den zumindest acht Montageflächen (9) angeordnet ist, und daß der Ablaufstutzen (7) des Mischtrichters (6) unmittelbar an den Aufgabestutzen oder den Aufgabetrichter der Kunststoff-Schneckenpresse angeschlossen ist.

## Claims

1. A metering device which is provided on a plastics worm extruder for supplying feed materials to the plastics worm extruder, having a multiplicity of buffer containers (3) for receiving feed materials which differ from buffer container (3) to buffer container (3), weighing-in devices (4) associated with the individual buffer containers (3), take-off worm conveyors (5) for the metered take-off of the feed materials from the buffer container (3), and having a mixing hopper (6) with a discharge nozzle (7) for the mixture, wherein the individual buffer containers (3), with the weighing-in device (4) associated with the individual buffer containers (3) and with the take-off worm conveyor (5) associated with the individual buffer containers (3), are each disposed in an apparatus stand (8), in fact according to choice and in different numbers depending on the plastics articles to be manufactured, wherein in addition a further buffer container (11) is provided for a further feed material, the outlet (12) of which leads axially, directly or via a metering conveyor, into the mixing hopper (6), characterised in that the apparatus stands (8) are fixed to the mixing hopper (6), that the mixing hopper (6) has mounting faces (9) in the region of its upper edge for each take-off worm conveyor (5), in accordance with the sides of a regular polygon which is at least octagonal, and that the individual mounting faces (9) have a transfer opening (10) for the feed material which emerges from the associated take-off worm conveyor (5), which transfer openings (10) can be closed when the take-off worm conveyor (5) is not attached, that the further buffer container (11) is disposed in the middle between the at least eight mounting faces (9), and that the discharge nozzle (7) of the mixing hopper (6) is attached directly to the feed nozzle or feed hopper of the plastics worm extruder.

## Revendications

1. Appareil de dosage destiné à une extrudeuse à vis à matière plastique pour l'alimentation en matières premières de l'extrudeuse à vis, comportant une pluralité de réservoirs tampons (3) pour recevoir des matières premières différentes d'un réservoir tampon (3) à l'autre réservoir tampon (3), des dispositifs de remplissage et de pesage (4) associés aux différents réservoirs tampons (3), des transporteurs-extracteurs à vis (5) pour l'extraction de quantités dosées des matières premières des réservoirs tampons (3) et une trémie de mélange (6) pourvue d'un conduit de sortie (7) pour le mélange, les différents réservoirs tampons (3) avec le dispositif de remplissage et de pesage (4) associé à chaque réservoir tampon (3) et avec le transporteur-extracteur à vis (5) associé à chaque réservoir tampon (3) étant disposés chacun dans un châssis d'appareil (8) distinct, cela de manière sélective et en nombre différent selon les objets en matière plastique à fabriquer, en outre un réservoir tampon (11) supplémentaire pour une matière première supplémentaire étant prévu, réservoir dont la sortie (12) débouche axialement directement ou par l'intermédiaire d'un transporteur de dosage dans la trémie de mélange (6), caractérisé par le fait que les châssis d'appareil (8) sont fixés à la trémie de mélange (6), que la trémie de mélange (6), dans la région de son bord supérieur, présente des surfaces de montage (9) pour chaque fois un transporteur-extracteur à vis (5) qui sont disposées selon les côtés d'un polygone régulier à huit côtés, par le fait que les différentes surfaces de montage (9) comportent une ouverture de chargement (10) pour la matière première sortant du transporteur-extracteur à vis (5) associé, laquelle ouverture de chargement (10) peut être fermée lorsqu'aucun transporteur-extracteur à vis (5) n'est connecté, par le fait que le réservoir tampon supplémentaire (11) est disposé au milieu entre les surfaces de montage (9) au nombre d'au moins huit et par le fait que le conduit de sortie (7) de la trémie de mélange (6) est connecté directement au conduit d'alimentation ou à la trémie d'alimentation de l'extrudeuse à vis à matière plastique.
